# EUROPEAN PATENT SPECIFICATION

(11) **EP 2 737 793 B1**
(45) Date of publication and mention of the grant of the patent: **18.01.2017**
(21) Application number: 13197737.3
(22) Date of filing: 12.11.2010
(51) Int. Cl.: A01K 1/06

(54) **Self-locking feed fence**
Selbstverriegelnder Futterzaun
Cornadis à bloquage automatique

(43) Date of publication of application: 04.06.2014
(62) Divisional of application: 10776707.1
(73) Proprietor: GEA Farm Technologies GmbH, 59199 Bönen (DE); Royal De Boer Stalinrichtingen B.V., 8938 AV, Leeuwarden (NL)
(72) Inventor: Ter Veer, Meindert Johan, 9833PC Den Ham (NL)
(74) Representative: Specht, Peter

(56) References cited:
- EP-A1- 0 664 950
- EP-A2- 0 845 206

## Description

The invention relates to improvements for self-locking feed fences and self-locking safety feed fences.

One type of feed fence includes a frame with at least one opening for receiving the head of an animal, e.g. a cow, and a locking device for alternately restraining and releasing the animal.

An example of this type of feed fence is shown in the document EP 0 940 075 A1.

The document EP 0 522 665 A1 describes a self-catching feeding fence, and the document US 5,564,368 A illustrates a control system for a livestock pen panel.

Farmers often use a self-locking feed fence to catch animals for treatment and artificial insemination (Al). In a self-locking feed fence all the cows are restrained, but often only one or a few cows need to be restrained. With the current feed fences it is not possible to leave one or more cows restrained without the use of loose or additional components. Farmers use e.g. a piece of rope or loose clamp to lock/restrain individual cows. Some feed fences provide the possibility of locking an individual cow by placing a bolt into the feed fence.

Documents EP-A1-0664950 and EP-A2-0845206 describe self-locking feed fences with releasing means.

Therefore the object of the invention is to provide an improved feed fence having fewer components easy to use.

This object is achieved by a feed fence according to the features of claim 1.

The self-locking feed fence is provided with an unlatch slide which is coupled with said latch actuator, and with at least one release element engaging the at least one latch, wherein said locking section of the at least one latch locks the at least one pivoting bar in the locking position and cooperates with said unlatch slide, and that at least one release element is provided engaging said release section of the at least one latch.

One advantage of the invention is that no loose components are required and the number of components is reduced.

In another further embodiment said at least one release element is provided to unlock the at least one latch individually. In this way, an advantage of individually unlocking is possible.

The latch actuator can be coupled with a lever to obtain a simple and safe handling.

The invention will be better understood by means of the following description, given with reference to the drawings which illustrate the embodiments of the invention, and in which:
- Figure 1: shows a feed fence of the invention;
- Figures 2-2a: are views of two openings of the feed fence of figure 1 and a view in direction IIa;
- Figure 3: is a view of latch mechanisms of the feed fence shown in figure 1 in an unlocking position;
- Figure 4: is a view of the latch mechanisms of figure 3 in a locking position;
- Figure 5: shows a coupling element;
- Figure 5a: is a perspective view of a guide bush for the coupling element of figure 5;
- Figure 6: is another view of the latch mechanisms of figure 3 in the unlocking position;
- Figure 7: shows the latch mechanism of figure 3 in a larger scale in the locking position;
- Figures 8...9: show the latch mechanisms of figure 7 in the unlocking and locking positions;
- Figure 10: is a view of the uncoupled latch mechanism of figure 6 in the locking position;

- Figure 11: is a view of a safety feed fence of the invention;
- Figures 12...13: show the latch mechanism of figure 11 in the unlocking and locking positions;
- Figure 14: is a view of the latch mechanism of figure 11 in larger detail;
- Figures 15...18: are views of different mountings of a pivoting bar; and
- Figures 19...19a: are views of a lever drive mechanism of the latch device.

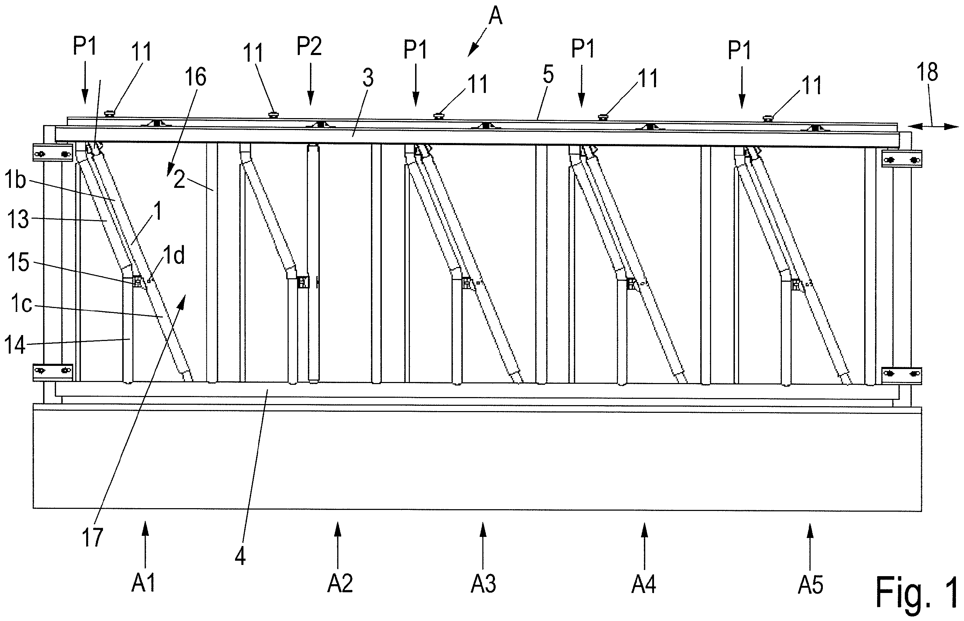

A self-locking feed fence A according to the invention is shown in figure 1 and comprises at least one pivoting bar 1, two vertical bars 2, a top rail 3, a lower bar 4 and a latch mechanism L. The top rail 3 and the lower bar 4 are arranged in parallel and connected by the vertical bars 2. In this way they form an opening. Figure 1 shows five openings A1...5. It is to be understood that the feed fence may include any number of openings A1 ...5.

In this embodiment a vertical lower side member 14 is arranged in the left third of the opening. The upper end of the vertical lower side member 14 is connected to an upper side member 13 which extends in an angle to the upper left corner of the opening. At the connection of the vertical lower side member 14 and the upper side member 13 the pivoting bar 1 having a swivelling axis 1d is pivotally attached in a mounting 15. The pivoting bars 1 of openings A1 and A3...5 are in an open position P1 and respectively rest with lock ends 1a on the upper side members 13, thereby forming triangular upper openings 16 with their upper sections 1b for e.g. cows to go with heads through the feed fence A. The pivoting bars 1 have lower sections 1c closing lower openings 17 of the openings A1 and A3...5.

When a cow having its head in the upper opening 16 moves its head down to eat, the pivoting bar 1 is moved in its locking position P2 which is a vertical position in this embodiment. This is shown for the opening A2 in figure 1. In this vertical or locking position P2 the pivoting bar 1 is locked by a latch mechanism L which can be released by a release element 11. The latch mechanism L will be described in more detail below. A latch actuator 5, preferably in a shape of a u-profile, is mounted on the top rail 3 and slidably attached to it. That attachment can be done in different ways and will not be further described. The latch actuator 5 can be moved in its axial direction in actuating directions 18. The latch actuator 5 locks all latch mechanisms L in a locking position and unlocks them in an unlocking position.

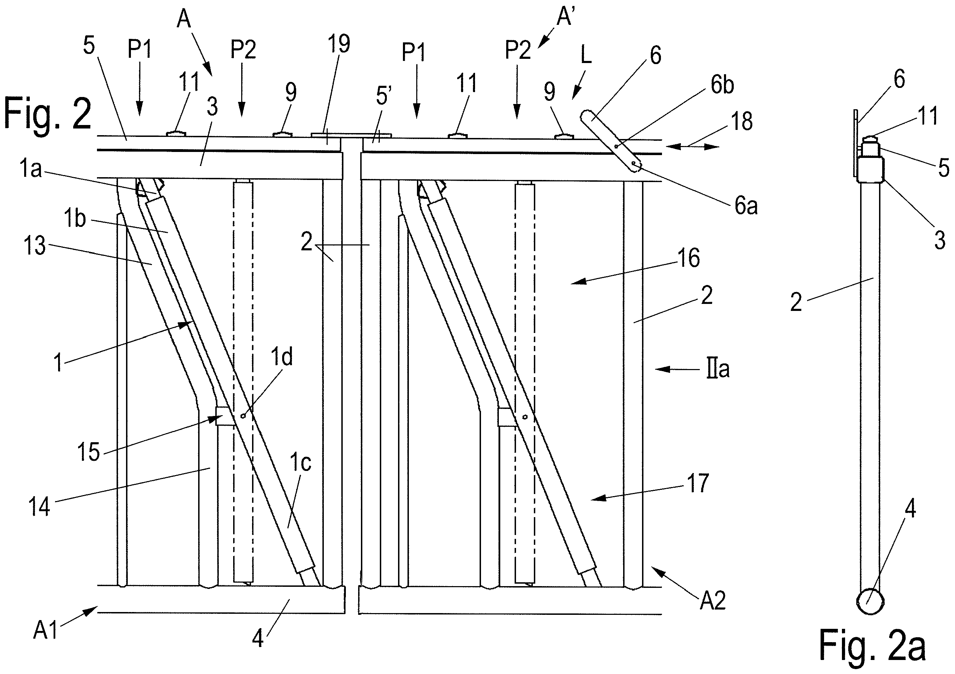

Figure 2 shows two openings A1 and A2. The opening A1 belongs to the feed fence A of figure 1 and the opening A2 belongs to a second feed fence A'. Figure 2a shows a view in direction IIa of figure 2.

A lever 6 is pivotally attached in a pivot 6a to a side of the top rail 3. The lever 6 is also connected to a side of the latch actuator 5 via an actuator pin 6b. This can be seen in figure 2a as well. In this figure 2 a further possibility of connecting feed fences A, A' is shown. To combine two or more feed fences A, A' in a row, the respective latch actuators 5, 5' can be connected by a simple connecting link 19 to be movable by only one lever 6. Rotating the lever 6 around the pivot 6a shifts the latch actuator 5 in actuating directions 18. Figure 2 shows also coupling elements 9 on top of the latch actuator. The coupling elements 9 can be accessed manually from above and will be explained in more detail below.

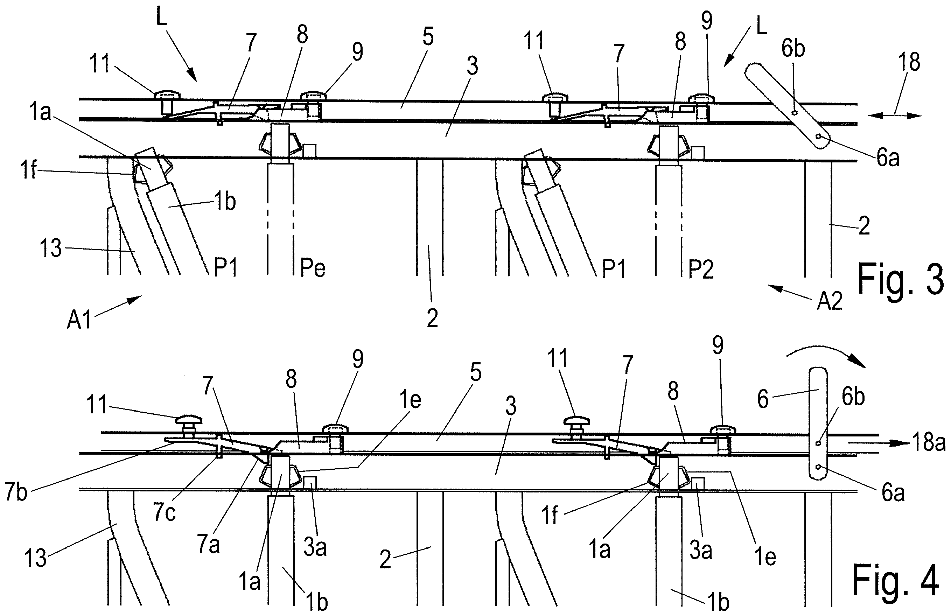

Figure 3 is a view of the latch mechanism L of the feed fence A shown in figure 1 in an unlocking position and figure 4is a view of the latch mechanism L of figure 3 in a locking position.

In this embodiment the latch mechanism L comprises a latch 7, an unlatch slide 8, the release element 11 and a coupling element 9. The unlatch slide 8 cooperates with the latch 7. The coupling element 9 couples the unlatch slide 8 to the latch actuator 5. In the unlocking position shown in figure 3 the latch actuator 5 is shifted by the lever 6 to the left in actuating direction 18. In this way the latch actuator 5 has moved the unlatch slides 8 via the coupling elements 9 to lift the latches 7. The pivoting bars 1 can swivel freely.

When the lever 6 is rotated clockwise, as shown in figure 4, the lever 6 moves the latch actuator 5 into locking direction 18a. The unlatch slides 8 release the latches 7 which can fall in their locking positions by gravity. The pivoting bars 1 respectively rest with a left stop 1f of their lock ends 1 a on the upper side members 13. When a pivoting bar 1 is rotated clockwise, its lock end 1 a contacts a locking section 7a of the latch 7 and lifts the latch 7. The lock end 1 a comes to a stop by contacting a stop block 3a with a right stop 1 e of the lock end 1 a. The stop blocks are fixed to the top rail 3. In this position of the lock end 1 a of the pivoting bar 1 the latch 7 falls into its locking position again by gravity, whereby its locking section 7a locks the lock end 1 a of the pivoting bar 1 and keeps it locked in the locking position.

To release a locked latch 7 individually, the respective release element 11 can pressed down to unlock the respective latch 7. The release element 11 contacts a release section 7b of the latch 7. The release section 7b is arranged opposite to the locking section 7a of the latch 7. The latch 7 has a tilting section 7c supported by the top rail 3. The tilting section 7c enables the latch 7 to swivel around it.

When a certain locked latch 7 has to stay in its locked position although the other latches 7 are unlocked by the latch actuator 5, this locked latch 7 can be uncoupled by pulling the coupling element 9.

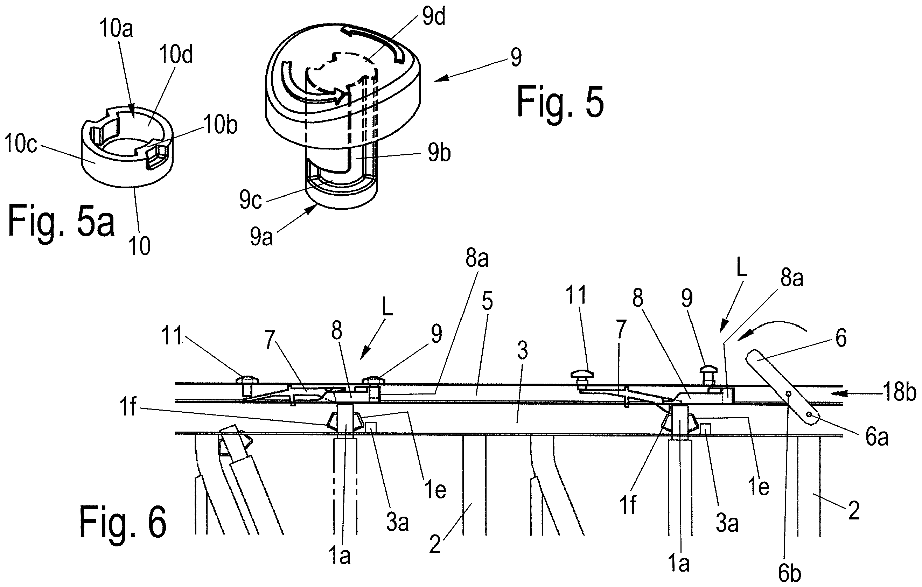

Figure 5 shows an embodiment of the coupling element 9, and figure 5a is a view of a guide bush 10 for the coupling element 9 of figure 5.

The coupling element 9 is a type of a twistlock element. It has a twistlock 9a which can be pushed, pulled and turned by a knob. The guide bush 10 is mounted into the latch actuator 5 and fixed to it. The twistlock 9a is pushed through a through hole 10a of the guide bush 10. An inner profile 10b of the guide bush 10 is provided and engages with an inner vertical guide section 9b and an inner horizontal guide section 9c of the twistlock 9a. This engagement makes it possible that the coupling element 9 can be pulled up und pushed down when the inner profile 10b of the guide bush 10 engages with the inner vertical guide section 9b of the twistlock 9a. When the coupling element 9 is pulled up completely, the inner profile 10b of the guide bush 10 engages with the inner horizontal guide section 9c of the twistlock 9a and the coupling element 9 can be rotated, e.g. 90 degrees, and stays in that pulled up position. Rotating in opposite direction will enable the coupling element 9 to be pushed down.

In figure 6 another view of the latch mechanisms 7 of figure 3 is shown in the unlocking position. The latch actuator 5 has been shifted by the lever 6 into the unlocking direction 18b to unlock the latches. The coupling element 9 of the left latch 7 is pushed down and couples the unlatch slide 8 to the latch actuator 5, as the twistlock 9a of the coupling element 9 is received in a coupling seat 8a of the unlatch slide 8. So the left latch 7 is lifted and unlocked by the shifted unlatch slide 8.

The coupling element 9 of the right latch 7 is pulled up and rotated to stay in the pulled up position. The twistlock 9a is pulled out of the coupling seat 8a of the unlatch slide 8. In this way the corresponding unlatch slide 8 is uncoupled from the latch actuator 5 and the movement thereof. The unlatch slide 8 has not been moved by the latch actuator 5 and the right latch 7 stays in the locking position. In this case all cows have been using the feed fence A have been released except that one of the uncoupled latch 7.

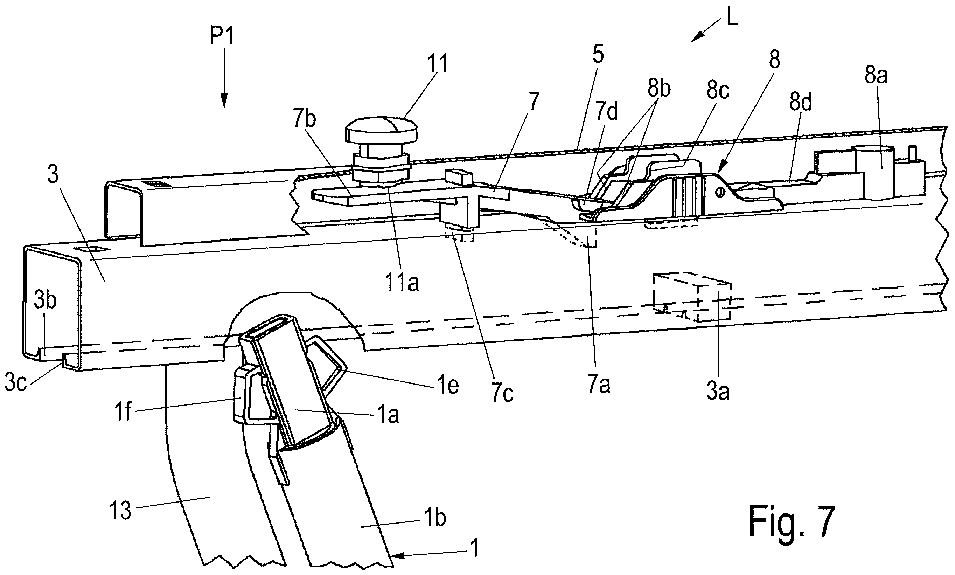

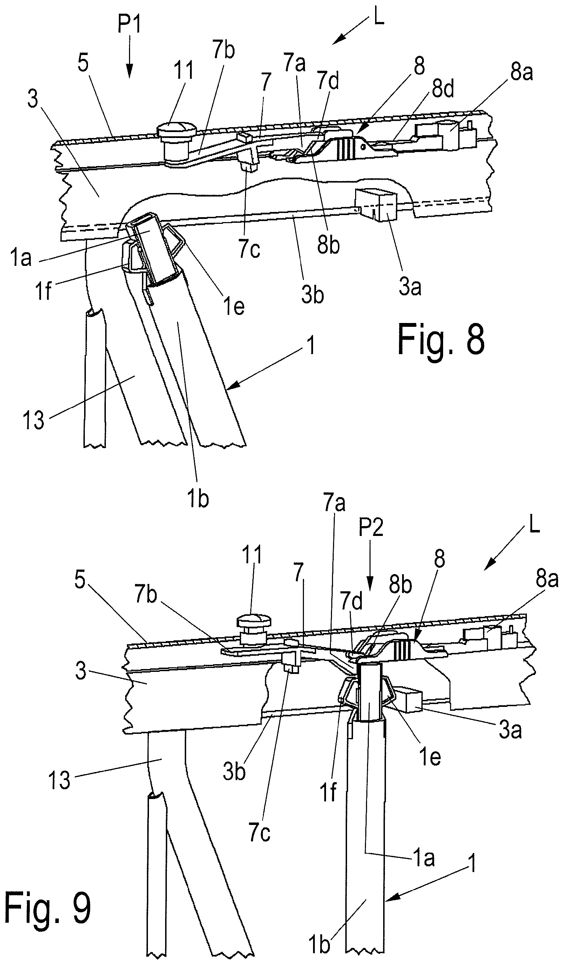

Figure 7 shows the latch mechanism L of figure 3 in a larger scale in the locking position. Figures 8 and 9 show the latch mechanisms L of figure 7 in the unlocking and locking positions.

In this embodiment the unlatch slide 8 is connected to the coupling seat 8a by a connecting section 8d. The part of the unlatch slide 8 cooperating with the latch 7 has two sloping guideways 8b which cooperate with guide parts 7d of the latch 7. The guide parts 7d are arranged on both sides of the latch 7 above the locking section 7a. Moving the unlatch slide 8 in direction to the latch 7, the guide parts 7d and the latch 7 will be lifted up and the latch swivels counter clockwise around its tilting section 7c.

The release element 11 is a type of a push button, has a pressure section 11 a on its lower end and is attached to the latch actuator 5. Pressing the release element 11 will cause the latch 7 to swivel counter clockwise from the shown locking position in the unlocking position. This is shown in figure 8.

The lock end 1 a of the pivoting bar 1 is guided in a slot between guide sections 3b, 3c of the top rail 3. The guide sections 3b, 3c extend in longitudinal direction of the top rail 3. The stop block 3a is fixed on the guide sections 3b, 3c. The lock end 1 a can be made of plastic material. Therefore it can provide a dampening function when the pivoting bar 1 hits its rest positions with said lock end 1 a.

Figure 9 shows the lock end 1 a of the pivoting bar 1 in its locking or locking position P2.

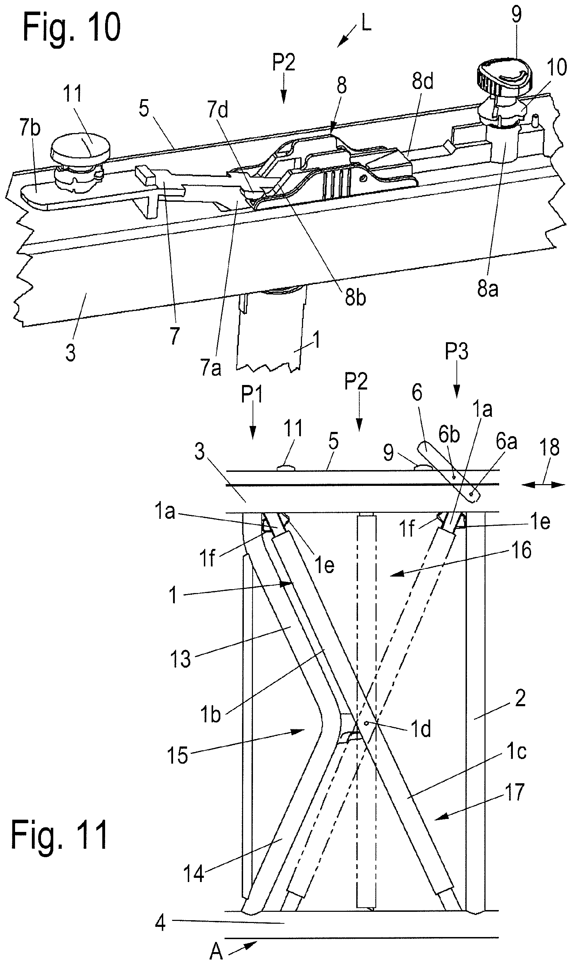

In figure 10 the uncoupled latch mechanism L of figure 6 can be seen in the locking position. The coupling element 9 has been pulled up and turned so that it stays in the pulled up position. The guide bush 10 is fixed in the latch actuator 5. The twistlock 9a has been pulled out of the coupling seat 8a of the unlatch slide 8. A movement of the latch actuator 5 will not move the unlatch slide 8 and therefore will not unlock the latch 7.

The latch mechanism L can also be used for a so called self-locking safety feed fence A. Figure 11 is a view of a safety feed fence A of the invention. The difference between a safety and a normal self-locking feed fence A is the possibility for a cow (or a similar animal) to leave the fence through the lower opening 17 on the bottom of the feed fence A. In this safety position P3 the pivoting bar 1 contacts with its right stop 1e at the vertical bar 2. In this embodiment the lower side member 14 and the upper side member 13 form a triangle. The latch mechanism L of the safety feed fence A has an additional latch 12 to enable catching or locking the pivoting bar 1 as there is no stop block 3a.

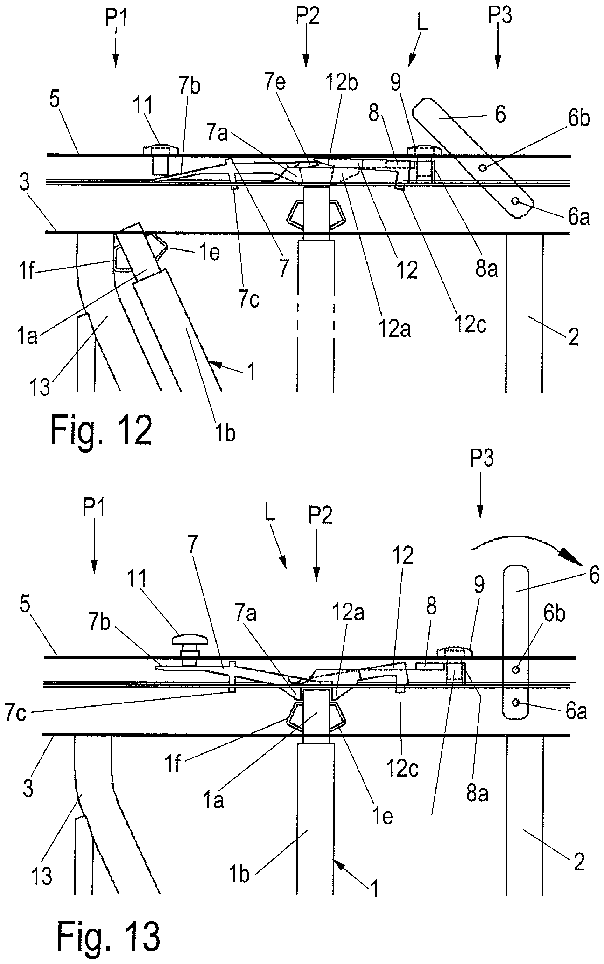

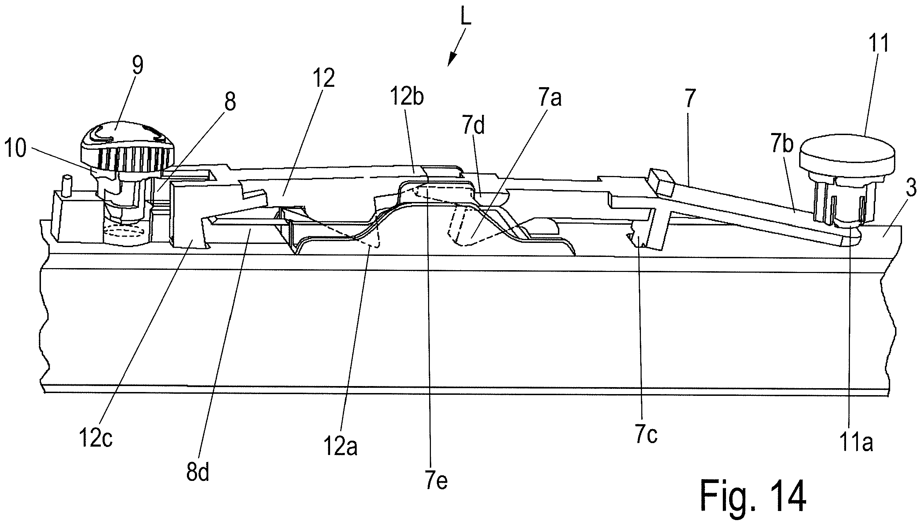

Figures 12 and 13 show the latch mechanism L of figure 11 in the unlocking and locking positions. Figure 14 is a view of the latch mechanism L of figure 11 in larger detail.

The additional latch 12 is arranged on the opposite side of latch 7 next to the unlatch slide 8. This can be seen best in figure 14. The additional latch 12 is arranged above the connecting section 8d and between the guideways 8b of the unlatch slide 8. The additional latch 12 comprises a locking section 12a similar to the locking section 7a of the latch 7. The locking section 12a is arranged opposite to the locking section 7a so that both locking sections 7a and 12a can receive the lock end 1 a of the pivoting bar 1 between them as can be seen in figure 13.

Moreover, the additional latch 12 has a lift section 12b which extends in its longitudinal direction towards the latch 7 above an extended lift end 7e of the latch 7. The lift end 7e of the latch 7 contacts the bottom side of the lift section 12b of the additional latch 12 between the guideways 8b of the unlatch slide 8.

The additional latch 12 also has a tilting section 12c which enables the additional latch 12 to swivel around it similar to the latch 7.

When the latch actuator 5 is moved by the lever 6, the latch 7 is lifted or lowered by the unlatch slide 8 via the guideways 8b and guide parts 7d, the lift end 7e of the latch 7 lifts or lowers the lift section 12b of the additional latch 12 correspondingly. So the unlocking position (shown in figures 12 and 14) and locking position (see figure 13) will be set as described before.

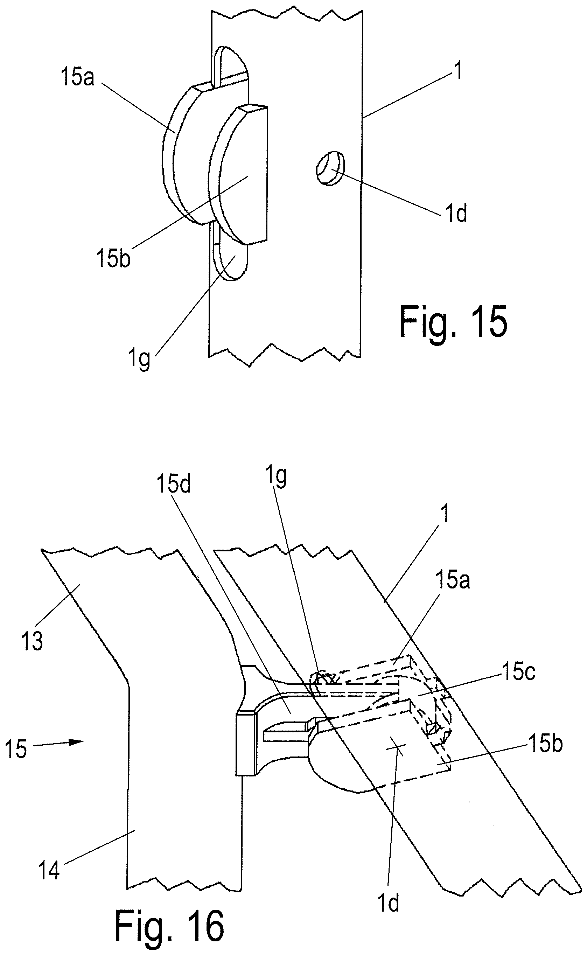

Figures 15...18 are views of different mountings 15 of the pivoting bar 1.

Figure 15 shows the section of the pivoting bar 1 with the swivelling axis 1d. In this area the pivoting bar 1, preferably made of a tube, has a slot hole 1 g in longitudinal direction of the pivoting bar 1 on the side facing to the upper and lower side members 13, 14. The slot hole 1g is arranged having the swivelling axis 1d in between. On both sides of the slot hole 1g cover plates 15a, 15b are mounted and protrude from the slot hole 1g. The cover plates 15a, 15b extend within the pivoting bar 1 around the swivelling axis 1d and reinforce the pivoting bar 1 around the hole of the swivelling axis 1d. Each one of the protruding sections of the cover plates 15a, 15b has a rounded shape to cover a mounting arm 15d of the mounting 15 (see figure 16) and to avoid injuries.

Figure 16 is a view of the mounted pivoting bar 1 of figure 15. The mounting arm 15d extends through the slot hole 1 g between the cover plates 15a, 15b and supports the swivelling axis 1 d with a disk shaped mounting element 15c.

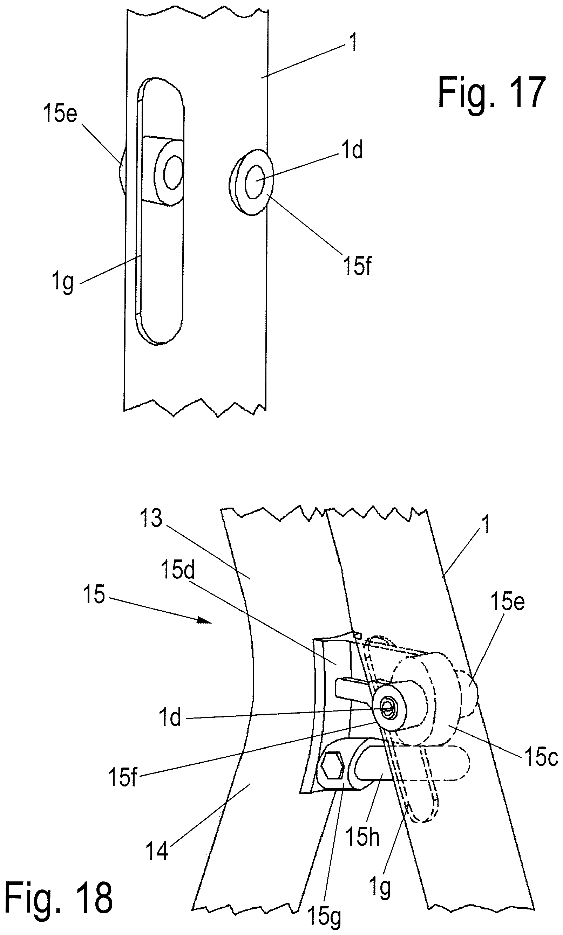

The mounting 15 of figures 17 and 18 shows mounting bushings 15e, 15f which are arranged within the walls of the pivoting bar 1 around the holes of the swivelling axis 1 d. The pivoting bar 1 is provided with the slot hole 1 g. The assembled status of this mounting 15 is shown in figure 18. The mounting arm 15d extends through the slot hole 1g and supports the mounting element 15c. A bolt or pin extends through the holes of the swivelling axis 1d, the mounting bushings 15e, 15f and the mounting element 15c.

Furthermore, figure 18 shows a pressure spring element 15h received in a receptacle 15g. The receptacle 15 is arranged below the mounting element 15c and can be made integral with it. The pressure spring element 15h can be made of rubber material and has a cylindrical shape. One end of the pressure spring element 15h is fixed in the receptacle and the other end thereof is inserted through the slot hole 1g into the pivoting bar 1 to press against the inner wall of the pivoting bar. So the pivoting bar 1 is always turned into position P1 when it is released from position P2. In case of a safety feed fence A the pivoting bar 1 will be turned by the pressure spring element 15h as well from position P3 into position P1.

In another embodiment the latch actuator 5 can be provided for only the latch 7 and latch 7 and the additional latch 12, using the same unlatch slide 8.

The latch actuator 5 is preferably made from a u-profile. Other profiles are possible. The latch actuator 5 serves also as a cover of the latches 7.

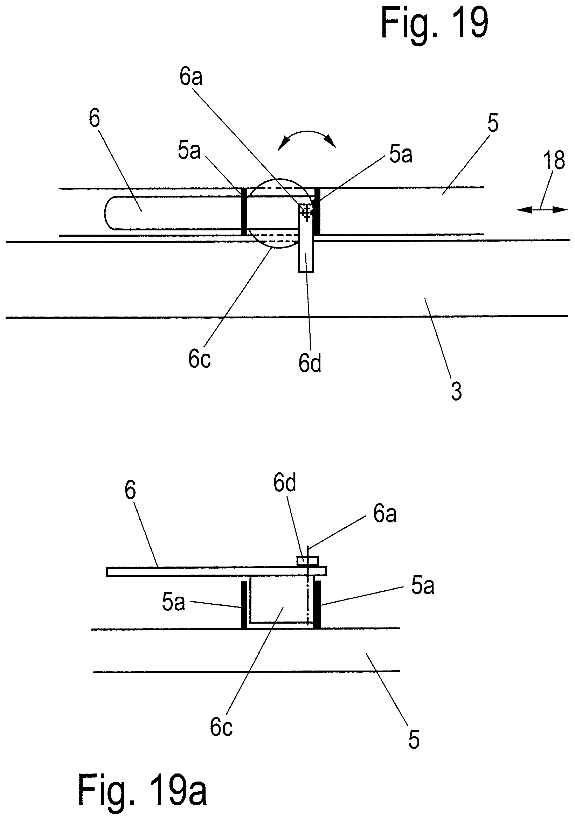

Finally, figure 19 shows a side view of a lever drive mechanism of the latch device L, and figure 19a shows a top view of figure 19.

The lever 6 is pivoted with its lower end in a pivot 6a on a lever support 6d fixed to the top rail 3. An eccentric element 6c in the shape of a cylinder is attached to the lower section of the lever 6 and engages between two drive walls 5a which are fixed to the latch actuator 5. Rotating the lever 6 around its pivot 6a, e.g. in a clockwise direction, will cause the eccentric element 6c to an eccentric rotation around pivot 6a. In this manner the eccentric element 6c presses against the right drive wall 5a (figure 19a) and therefore the latch actuator 5 will be moved to the right in a corresponding actuating direction 18. Rotating the lever 6 in a counter clockwise direction will move the latch actuator 5 vice versa to the left in the same manner as described above.

The foregoing descriptions of specific embodiments of the invention have been presented for purposes of illustration and description. They are not intended to be exhaustive or to limit the invention to the precise forms disclosed. It is obvious that many modifications and variations are possible. It is intended that the scope of the invention be defined by the claims appended hereto and their equivalents.

The unlocking position of the latch devices 7 can be seen and well recognized, because the release elements 11 do not protrude from the top surface of the latch actuator 5, 5'. This can be seen clearly in figures 2, 3, 6.

The locking position of the latch devices 7 can also be seen well recognized by the vertical position of the release elements 11. In this locking position the release elements 11 of the latch devices 7 being in a locking position are in their top position, i.e. the release elements 11 are protruding from the top surface of the latch actuator 5, 5'.

In a further embodiment the coupling elements 9 as well as the release elements 11 can comprise an electric contact or electric position detecting element which is activated according to their position. In this manner a signal can be created and used for monitoring purposes, maybe for remote monitoring the feed fence A. This can be realized by wire or wireless.

In another embodiment the unlatch slide 8 is firmly attached to the latch actuator without any adjustable coupling element 9. The release element 11 is provided to unlock the latch 7 individually.

### References

- 1: Pivoting bar
- 1a: Lock end
- 1b: Upper section
- 1c: Lower section
- 1d: Swivelling axis
- 1e: Right stop
- 1f: Left stop
- 1g: Slot hole
- 2: Vertical bar
- 3: Top rail
- 3a: Stop block
- 3b...c: Guide section
- 4: Lower bar
- 5, 5': Latch actuator
- 5a: Drive wall
- 5: Lever
- 6a: Pivot
- 6b: Actuator pin
- 6c: Eccentric element
- 6d: Lever support
- 6: Latch
- 7a: Locking section
- 7b: Release section
- 7c: Tilting section
- 7d: Guide part
- 7e: Lift end
- 7: Unlatch slide
- 8a: Coupling seat
- 8b: Guideway
- 8c: Guideway stop
- 8d: Connecting section
- 8: Coupling element
- 9a: Twistlock
- 9b: Inner vertical guide section
- 9c: Inner horizontal guide section
- 9d: External profile
- 9: Guide bush
- 10a: Through hole
- 10b: Inner profile
- 10c: Outer surface
- 10d: Inner surface
- 10: Release element
- 11a: Pressure section
- 11: Additional latch
- 12a: Locking section
- 12b: Lift section
- 12c: Tilting section
- 12: Upper side member
- 13: Lower side member
- 14: Mounting
- 15a...b: Cover plates
- 15c: Mounting element
- 15d: Mounting arm
- 15e...f: Mounting bushings
- 15g: Receptacle
- 15h: Pressure spring element
- 15: Upper opening
- 16: Lower opening
- 17: Actuating directions
- 18a: Locking direction
- 18b: Unlocking direction
- 19: Connecting link
- A, A': Feed fence
- A1...A5: Openings
- L: Latch mechanism
- P1: Open position
- P2: Locking position
- P3: Safety position

## Claims

1. Self-locking feed fence (A), comprising at least one pivoting bar (1), two vertical bars (2), a top rail (3), a lower bar (4) and a latch mechanism (L), said top rail (3) and said lower bar (4) arranged in parallel and connected by said vertical bars (2) forming an opening (A1...5) in which said at least one pivoting bar (1) is arranged and can be moved from an open position (P1) forming an upper opening (16) to a locking position (P2) forming a closed upper opening (16), and whereby said at least pivoting bar (1) can be moved back to said open position (P1), said at least one pivoting bar (1) being lockable and releasable by the latch mechanism (L) in the locking position (P2), said latch mechanism (L) comprising at least one latch (7), one unlatch slide (8) and a latch actuator (5) slidably arranged on said top rail (3), wherein said unlatch slide (8) is firmly attached with said latch actuator (5), wherein the at least one latch (7) comprises a locking section (7a), a release section (7b) and a tilting section (7c), wherein said locking section (7a) of the at least one latch (7) locks the at least one pivoting bar (1) in the locking position (P2) and said latch (7) cooperates with said unlatch slide (8), and that at least one release element; (11) is provided engaging said release section (7b) of the at least one latch (7), wherein said at least one release element (11) is a type of a push button having a pressure section (11a) on its lower end which engages the at least one latch (7), wherein the pressure section (11 a) contacts said release section (7b) of the at least one latch (7). **characterized in that** the at least one release element (11) is attached to said latch atuator (5) which is slidably arranged on said top rail (3).

2. Self-locking feed fence (A) according to claim 1, **characterized in that** the locking position of the corresponding latch (7) can be seen well recognized by the vertical position of said release element (11), wherein the release element (11) is in a top position, protruding from the top surface of the latch actuator (5).

3. Self-locking feed fence (A) according to any of the claims 1 to 2, **characterized in that** said at least one release element (11) comprises an electric contact or position detecting element to provide a signal according to its position.

4. Self-locking feed fence (A) according to any of the claims 1 to 3, **characterized in that** said at least one release element (11) is provided to unlock the at least one latch (7) individually.

5. Self-locking feed fence (A) according to any of the claims 1 to 4, **characterized in that** said one latch (7) cooperates with said unlatch slide (8) by means of two sloping guideways (8b) of the unlatch slide (8) cooperating with guide parts (7d) of the at least one latch (7).

6. Self-locking feed fence (A) according to any of the claims 1 to 5, **characterized in that** said latch actuator (5) is coupled with a lever (6).

## Patentansprüche

1. Selbstverriegelndes Fressgitter (A), umfassend wenigstens eine Schwenkstange (1), zwei vertikale Stangen (2), eine obere Schiene (3), eine untere Stange (4) und einen Klinkenmechanismus (L), wobei die obere Schiene (3) und die untere Stange (4), die parallel angeordnet sind und durch die vertikalen Stangen (2) verbunden sind, eine Öffnung (A1 ... 5) bilden, in der die wenigstens eine Schwenkstange (1) angeordnet ist und von einer offenen Position (P1), die eine obere Öffnung (16) bildet, in eine Verriegelungsposition (P2), die eine geschlossene obere Öffnung (16) bildet, bewegt werden kann, und wobei die wenigstens eine Schwenkstange (1) zu der offenen Position (P1) zurückbewegt werden kann, wobei die wenigstens eine Schwenkstange (1) durch den Klinkenmechanismus (L) in der Verriegelungsposition (P2) verriegelt und freigegeben werden kann, wobei der Klinkenmechanismus (L) wenigstens eine Klinke (7), einen Entriegelungsschieber (8) und eine Klinkenbetätigungsvorrichtung (5) umfasst, die an der oberen Schiene (3) schiebbar angeordnet ist, wobei der Entriegelungsschieber (8) fest mit der Klinkenbetätigungsvorrichtung (5) verbunden ist, wobei die wenigstens eine Klinke (7) einen Verriegelungsabschnitt (7a), einen Freigabeabschnitt (7b) und einen Kippabschnitt (7c) umfasst, wobei der Verriegelungsabschnitt (7a) der wenigstens einen Klinke (7) die wenigstens eine Schwenkstange (1) in der Verriegelungsposition (P2) verriegelt und wobei die Klinke (7) mit dem Entriegelungsschieber (8) zusammenwirkt, und wobei wenigstens ein Freigabeelement (11) vorgesehen ist, das sich in Eingriff mit dem Freigabeabschnitt (7b) der wenigstens einen Klinke (7) befindet, wobei das das wenigstens eine Freigabeelement (11) eine Art Druckknopf ist, der an seinem unteren Ende einen Druckabschnitt (11a) aufweist, der mit der wenigstens einen Klinke (7) in Eingriff ist, wobei der Druckabschnitt (11a) den Freigabeabschnitt (7b) der wenigstens einen Klinke (7) berührt,
**dadurch gekennzeichnet, dass** das wenigstens eine Freigabeelement (11) an der Klinkenbetätigungsvorrichtung (5) befestigt ist, die schiebbar an der oberen Schiene (3) angeordnet ist.

2. Selbstverriegelndes Fressgitter (A) nach Anspruch 1, **dadurch gekennzeichnet, dass** die Verriegelungsposition der entsprechenden Klinke (7) durch die vertikale Position des Freigabeelements (11) gut erkennbar ist, wobei sich das Freigabeelement (11) in einer oberen Position befindet, in der es von der Oberseite der Klinkenbetätigungsvorrichtung (5) vorragt.

3. Selbstverriegelndes Fressgitter (A) nach einem der Ansprüche 1 bis 2, **dadurch gekennzeichnet, dass** das wenigstens eine Freigabeelement (11) einen elektrischen Kontakt oder ein Positionsdetektionselement umfasst, um ein Signal entsprechend seiner Position bereitzustellen.

4. Selbstverriegelndes Fressgitter (A) nach einem der Ansprüche 1 bis 3, **dadurch gekennzeichnet, dass** das wenigstens eine Freigabeelement (11) vorgesehen ist, um die wenigstens eine Klinke (7) einzeln zu entriegeln.

5. Selbstverriegelndes Fressgitter (A) nach einem der Ansprüche 1 bis 4, **dadurch gekennzeichnet, dass** die wenigstens eine Klinke (7) mit dem Entriegelungsschieber (8) mithilfe von zwei geneigten Führungsbahnen (8b) des Entriegelungsschiebers (8) zusammenwirkt, die mit Führungsteilen (7d) der wenigstens einen Klinke (7) zusammenwirken.

6. Selbstverriegelndes Fressgitter (A) nach einem der Ansprüche 1 bis 5, **dadurch gekennzeichnet, dass** die Klinkenbetätigungsvorrichtung (5) mit einem Hebel (6) gekoppelt ist.

## Revendications

1. Barrière de mangeoire autobloquante (A), comprenant au moins un barreau pivotant (1), deux barreaux verticaux (2), un rail supérieur (3), un barreau inférieur (4) et un mécanisme de loquet (L), ledit rail supérieur (3) et ledit barreau inférieur (4) étant disposés parallèlement et reliés par lesdits barreaux verticaux (2) en formant une ouverture (A1... 5) dans laquelle est disposé ledit au moins un barreau pivotant (1) qui peut être déplacé d'une position d'ouverture (P1) formant une ouverture supérieure (16) à une position de verrouillage (P2) fermant une ouverture supérieure (16), et ledit au moins un barreau pivotant (1) pouvant ainsi être ramené dans ladite position d'ouverture (P1), ledit barreau pivotant (1) pouvant être bloqué et débloqué par le mécanisme de loquet (L) dans la position de verrouillage (P2), lequel mécanisme de loquet (L) comprend au moins un loquet (7), une coulisse de déverrouillage (8) et un actionneur de loquet (5) disposé de façon coulissante sur ledit rail supérieur (3), dans laquelle ladite coulisse de déverrouillage (8) est solidement fixée audit actionneur de loquet (5), dans laquelle l'au moins un loquet (7) comprend une partie de blocage (7a), une partie de déblocage (7b) et une partie de basculement (7c), ladite partie de blocage (7a) de l'au moins un loquet (7) bloquant l'au moins un barreau pivotant (1) dans la position de verrouillage (P2) et ledit loquet (7) coopérant avec ladite coulisse de déverrouillage (8), et dans laquelle au moins un élément de déblocage (11) est prévu en prise avec ladite partie de déblocage (7b) de l'au moins un loquet (7), l'au moins un élément de déblocage (11) étant du type à bouton-poussoir avec une partie d'appui (11a) à son extrémité inférieure qui se met en prise avec l'au moins un loquet (7), la partie d'appui (11a) venant en contact avec ladite partie de déblocage (7b) de l'au moins un loquet (7), **caractérisée en ce que** l'au moins un élément de déblocage (11) est fixé audit actionneur de loquet (5) qui est disposé de façon coulissante sur ledit rail supérieur (3).

2. Barrière de mangeoire autobloquante (A) selon la revendication 1, **caractérisée en ce que** la position de verrouillage du loquet (7) correspondant est bien reconnaissable à la position verticale dudit élément de déblocage (11), l'élément de déblocage (11) se trouvant dans la position haute et dépassant de la face supérieure de l'actionneur de loquet (5).

3. Barrière de mangeoire autobloquante (A) selon l'une quelconque des revendications 1 à 2, **caractérisée en ce que** ledit au moins un élément de déblocage (11) comprend un contact électrique ou un élément de détection de position qui produit un signal selon sa position.

4. Barrière de mangeoire autobloquante (A) selon l'une quelconque des revendications 1 à 3, **caractérisée en ce que** ledit au moins un élément de déblocage (11) est prévu pour débloquer l'au moins un loquet (7) individuellement.

5. Barrière de mangeoire autobloquante (A) selon l'une quelconque des revendications 1 à 4, **caractérisée en ce que** ledit loquet (7) coopère avec ladite coulisse de déverrouillage (8) au moyen de deux pistes de guidage (8b) obliques sur ladite coulisse de déverrouillage (8), qui coopèrent avec deux parties de guidage (7d) de l'au moins un loquet (7).

6. Barrière de mangeoire autobloquante (A) selon l'une quelconque des revendications 1 à 5, **caractérisée en ce que** ledit actionneur de loquet (5) est couplé à un levier (6).
